(19) Europäisches Patentamt
European Patent Office
Office européen des brevets

(11) **EP 3 940 118 B1**

(12) **EUROPEAN PATENT SPECIFICATION**

(45) Date of publication and mention
of the grant of the patent:
**06.03.2024 Bulletin 2024/10**

(21) Application number: **20770000.6**

(22) Date of filing: **12.02.2020**

(51) International Patent Classification (IPC):
**C25B 13/04** (2021.01)   **H01M 8/12** (2016.01)
**H01M 8/1253** (2016.01)   **H01M 8/126** (2016.01)
**C25B 13/07** (2021.01)   **C25B 1/042** (2021.01)
**H01M 8/1231** (2016.01)   **H01M 8/1246** (2016.01)
**H01M 8/18** (2006.01)

(52) Cooperative Patent Classification (CPC):
**C25B 13/07; C25B 1/042; H01M 8/1231;
H01M 8/1246;** H01M 2300/0074; Y02E 60/36;
Y02E 60/50; Y02P 70/50

(86) International application number:
**PCT/JP2020/005347**

(87) International publication number:
**WO 2020/184039 (17.09.2020 Gazette 2020/38)**

(54) **PROTON CONDUCTOR, FUEL CELL, AND WATER ELECTROLYSIS DEVICE**

PROTONENLEITER, BRENNSTOFFZELLE UND WASSERELEKTROLYSEVORRICHTUNG

CONDUCTEUR DE PROTONS, PILE À COMBUSTIBLE ET DISPOSITIF D'ÉLECTROLYSE DE L'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2019 JP 2019045885**

(43) Date of publication of application:
**19.01.2022 Bulletin 2022/03**

(73) Proprietor: **SUMITOMO ELECTRIC INDUSTRIES, LTD.**
**Osaka-shi, Osaka 541-0041 (JP)**

(72) Inventors:
• **HIGASHINO, Takahiro**
  **Osaka-shi, Osaka 541-0041 (JP)**
• **NODA, Yohei**
  **Osaka-shi, Osaka 541-0041 (JP)**
• **OGAWA, Mitsuyasu**
  **Osaka-shi, Osaka 541-0041 (JP)**
• **MAJIMA, Masatoshi**
  **Osaka-shi, Osaka 541-0041 (JP)**
• **GOTO, Kazuhiro**
  **Osaka-shi, Osaka 541-0041 (JP)**

(74) Representative: **Boult Wade Tennant LLP**
**Salisbury Square House**
**8 Salisbury Square**
**London EC4Y 8AP (GB)**

(56) References cited:
**JP-A- 2007 048 569    JP-A- 2015 058 399
JP-A- 2015 134 699    US-A1- 2015 099 623**

• **CAI WEI ET AL: "Effect of hafnium on the
microstructure, dielectric and ferroelectric
properties of Ba[Zr0.2Ti0.8]O3 ceramics",
CERAMICS INTERNATIONAL, vol. 38, no. 4, 28
December 2011 (2011-12-28), pages 3367-3375,
XP55905951, NL ISSN: 0272-8842, DOI:
10.1016/j.ceramint.2011.12.047**
• **KATO KOHEI ET AL: "Transport properties of
proton conductive Y-doped BaHfO3 and Ca or
Sr-substituted Y-doped BaZrO3", JOURNAL OF
THE AMERICAN CERAMIC SOCIETY, vol. 102, no.
3, 30 July 2018 (2018-07-30) , pages 1201-1210,
XP55905993, US ISSN: 0002-7820, DOI:
10.1111/jace.15946 Retrieved from the Internet:
URL:https://api.wiley.com/onlinelibrary/td
m/v1/articles/10.1111%2Fjace.15946>**

- IMASHUKU S. ET AL: "Improvement of Grain-Boundary Conductivity of Trivalent Cation-Doped Barium Zirconate Sintered at 1600°C by Co-doping Scandium and Yttrium", JOURNAL OF THE ELECTROCHEMICAL SOCIETY, vol. 155, no. 6, 10 April 2008 (2008-04-10), page B581, XP55905948, ISSN: 0013-4651, DOI: 10.1149/1.2901903
- YUSUKE OKUMURA ET AL: "High Performance Protonic Ceramic Fuel Cells with Acid-Etched Surfaces", JOURNAL OF THE ELECTROCHEMICAL SOCIETY, vol. 158, no. 9, 1 January 2011 (2011-01-01), page B1067, XP055216802, ISSN: 0013-4651, DOI: 10.1149/1.3606374

**Description**

**TECHNICAL FIELD**

The present invention relates to a proton conductor, a fuel cell, and a water electrolysis device.

**BACKGROUND ART**

Oxides such as barium zirconate (BZY) which has a perovskite structure and to which yttrium is added exhibit good proton conductivity even in a temperature range of 700°C or lower. These oxides, that is, proton conductors, are expected as electrolytes for a fuel cell and a water electrolysis device (see, for example, PATENT LITERATURE 1). CAI WEI ET AL, CERAMICS INTERNATIONAL, NL, (20111228), vol. 38, no. 4, pages 3367 - 3375, relates to the effect of hafnium on the microstructure, dielectric and ferroelectric properties of $Ba[Zr_{0.2}Ti_{0.2}]O_3$ ceramics. KATO KOHEI ET AL, JOURNAL OF THE AMERICAN CERAMIC SOCIETY, US, vol. 102, no. 3, pages 1201 - 1210, relates to the transport properties of proton conductive Y-doped $BaHfO_3$ and Ca or Sr-substituted Y-doped $BaZrO_3$. US2015099623A1 relates to an oxide film and proton conductive device. IMASHUKU S. ET AL, JOURNAL OF THE ELECTROCHEMICAL SOCIETY, (20080410), vol. 155, no. 6, page B581, relates to improvement of grain-boundary conductivity of trivalent cation-doped barium zirconate sintered at 1600°C by co-doping scandium and yttrium. JP2015058399A relates to a hydrogen permeation structure. Yusuke Okumura et al, JOURNAL OF THE ELECTROCHEMICAL SOCIETY, vol. 58, no.9, 1 January 2011, relates to high performance protonic ceramic fuel cells with acid-etched surfaces.

**CITATION LIST**

[PATENT LITERATURE]

PATENT LITERATURE 1: Japanese Laid-Open Patent Publication No. 2015-149243

**SUMMARY OF INVENTION**

A proton conductor according to an aspect of the present invention is according to claim 1.
A fuel cell according to an aspect of the present invention is according to claim 2.
A water electrolysis device according to an aspect of the present invention is according to claim 3.

**BRIEF DESCRIPTION OF DRAWINGS**

FIG. 1 is a graph showing an example of an X-ray absorption fine structure spectrum of a metal oxide.

FIG. 2 is a schematic diagram illustrating the configuration of a fuel cell.

**DESCRIPTION OF EMBODIMENTS**

[Problems to be solved by the present disclosure]

In a proton conductor having a perovskite structure, there is a concern that Hole conduction may occur in a high temperature oxygen atmosphere. Hole conduction promotes an increase in leakage current, and thus the transport number is decreased.
The composition of the proton conductor is adjusted in order to improve the performance as a proton conductor. In this case, if the composition of the adjusted proton conductor deviates significantly from the composition of the basic proton conductor, the crystal structure thereof may be unstable. In a proton conductor having an unstable crystal structure, segregated matter is likely to be generated. The generation of segregated matter decreases the conductivity.
The present disclosure has been made in view of the above circumstances, and an object of the present disclosure is to provide a proton conductor that achieves an improvement in transport number while suppressing a decrease in conductivity, and a fuel cell and a water electrolysis device having the proton conductor.

[Effects of the present disclosure]

According to the present disclosure, a proton conductor that achieves an improvement in transport number while suppressing a decrease in conductivity, and a fuel cell and a water electrolysis device having the proton conductor are obtained.

[Description of embodiments]

First, contents of embodiments of the present disclosure will be listed and described.

(1) A proton conductor according to an aspect of the present disclosure is according to claim 1.
In the proton conductor configured as described above, since hafnium (Hf) inhibits Hole conduction, the transport number is improved. Since the amount of Hf introduced is very small, the influence of Hf introduction on the crystal structure is suppressed. In the proton conductor, a decrease in conductivity is suppressed. In the proton conductor, an improvement in transport number is achieved while suppressing a decrease in conductivity.
(2) In the proton conductor of the above (1), the element B is zirconium (Zr). Accordingly, the crystal structure is stabilized, and thus generation of segregated matter is suppressed. In the proton conductor, a decrease in conductivity is suppressed.
(3) In the proton conductor of the above (1) or (2), the element A is barium (Ba). Accordingly, the crystal structure is stabilized, and thus a decrease in conductivity is suppressed.
(4) In the proton conductor according to any one of the above (1) to (3), the element M is yttrium (Y). Accordingly, the crystal structure is stabilized, and thus a decrease in conductivity is suppressed.
(5) In the proton conductor according to any one of the above (1) to (4), $x/(1-y)$ satisfies $0.005 \leq x/(1-y) \leq 0.013$. Accordingly, since hafnium (Hf) inhibits Hole conduction, the transport number is improved. Since the influence of Hf introduction on the crystal structure is suppressed, a decrease in conductivity is suppressed.
(6) In the proton conductor according to any one of the above (1) to (5), preferably, an X-ray absorption fine structure spectrum of the metal oxide has an absorption peak in an X-ray energy range from 9550 eV to 9570 eV, and the absorption peak includes at least two peaks.

As described above, the element B' in formula (1) is hafnium (Hf). Hafnium (Hf) is introduced into the metal oxide, for example, by using hafnium oxide as a raw material.
As will be described later, the absorption peak at the L3 absorption edge of hafnium (Hf) that is usually confirmed in an X-ray absorption fine structure spectrum of hafnium oxide is composed of a single peak having a maximum near 9560 eV. On the other hand, the absorption peak at the L3 absorption edge of hafnium (Hf) that is confirmed in the X-ray absorption fine structure spectrum of the metal oxide includes at least two peaks as described above.
That is, if, in an X-ray absorption fine structure spectrum, the absorption peak at the L3 absorption edge of hafnium (Hf) includes at least two peaks, this X-ray absorption fine structure spectrum is considered to indicate a state where hafnium (Hf) is introduced into a metal oxide as an element forming the crystal of the metal oxide, instead of detecting hafnium (Hf) as a reaction residue or as a result of mixing of raw materials. Since hafnium (Hf) is introduced as an element forming the crystal of the metal oxide, it is inferred that Hole conduction is inhibited and an effect of improving the transport number is achieved in this metal oxide.
(7) A fuel cell according to an aspect of the present disclosure is according to claim 2.
In the fuel cell, in the proton conductor, an improvement in transport number is achieved while suppressing a decrease in conductivity, and thus an improvement in electromotive force can be achieved.
(8) A water electrolysis device according to an aspect of the present disclosure is according to claim 3.
In the water electrolysis device, in the proton conductor, an improvement in transport number is achieved while suppressing a decrease in conductivity, and thus an improvement in current efficiency during steam electrolysis can be achieved.

[Details of embodiments]

Hereinafter, embodiments of the present disclosure will be described by means of specific examples with reference to the drawings.

[Proton conductor]

A proton conductor according to an embodiment of the present disclosure is a metal oxide having a perovskite crystal structure ($ABO_3$ phase) and is represented by formula

(1):

$$A_aB_{1-x-y}B'_xM_yO_{3-\delta} \qquad (1).$$

An element A in formula (1) enters an A site in the $ABO_3$ phase. An element B in formula (1) enters a B site in the $ABO_3$ phase. From the viewpoint of achieving an improvement in conductivity, a part of the B site is substituted with an element M in formula (1). Furthermore, from the viewpoint of inhibiting Hole conduction, another part of the B site is substituted with an element B' in formula (1). An element that enters an O site in the $ABO_3$ phase is oxygen (O).

In formula (1), the element A is barium (Ba). From the viewpoint of being able to achieve an improvement in proton conductivity, the element A is barium (Ba). The element A is composed of only barium (Ba).

In the above formula (1), the element B is zirconium (Zr). From the viewpoint of durability, the element B is zirconium (Zr). The element B is composed of only zirconium (Zr).

In the above formula (1), the element B' is hafnium (Hf). In the proton conductor, the element B' is composed of only hafnium (Hf). Since hafnium (Hf) inhibits Hole conduction, the transport number is improved.

In the above formula (1), the element M is yttrium (Y). The element M is a dopant. The introduction of this element M causes oxygen deficiency. Due to this oxygen deficiency, proton conductivity is exhibited. From the viewpoint of being able to achieve an improvement in proton conductivity, the element M is yttrium (Y). The element M is composed of only yttrium (Y).

In the above formula (1), "a" is the composition ratio of the element A which enters the A site. This "a" is represented by the ratio of the number of the element A, which enters the A site, to the total number of the element B, the element B', and the element M, which enter the B site of the perovskite crystal structure ($ABO_3$ phase). The number of each element is represented by the number of atoms corresponding to the element.

In the proton conductor, "a" satisfies $0.9 \leq a \leq 1.0$. When "a" is equal to or greater than 0.9, the proton conductor exhibits high proton conductivity. When "a" is equal to or less than 1.0, the chemical stability of the proton conductor is improved. From this viewpoint, this "a" preferably satisfies $0.950 \leq a \leq 1.000$ and more preferably satisfies $0.980 \leq a \leq 1.000$.

In the above formula (1), "x" is the composition ratio of the element B' which enters the B site. This "x" is represented as the ratio of the number of the element B', which enters the B site, to the total number of the element B, the element B', and the element M, which enter the B site of the perovskite crystal structure ($ABO_3$ phase). "y" is the composition ratio of the element M which enters the B site. This "y" is represented by the ratio of the number of the element M, which enters the B site, to the total number of the element B, the element B', and the element M, which enter the B site. The composition ratio of the element B which enters the B site is represented by $1-x-y$ using the composition ratios x and y.

In the proton conductor, "y" satisfies $0.1 \leq y \leq 0.2$. When "y" is equal to or greater than 0.1, the proton conductor exhibits high proton conductivity. When "y" is equal to or less than 0.2, the chemical stability of the proton conductor is improved. From this viewpoint, this "y" preferably satisfies $0.190 \leq y \leq 0.200$ and further preferably satisfies $0.195 \leq y \leq 0.200$.

The ratio $(x/(1-y))$ represents the ratio of the number of the element B', which enters the B site, to the total number of the element B and the element B' which enter the B site of the perovskite crystal structure ($ABO_3$ phase).

When the ratio $(x/(1-y))$ is greater than 0, the element B', that is, hafnium (Hf), inhibits Hole conduction, so that the transport number is improved. When the ratio $(x/(1-y))$ is equal to or less than 0.2, the chemical stability of the proton conductor is improved. From this viewpoint, the ratio $(x/(1-y))$ satisfies $0.005 \leq x/(1-y) \leq 0.013$.

In the proton conductor, "x" preferably satisfies $0 < x \leq 0.2$. When "x" is greater than 0, hafnium (Hf) inhibits Hole conduction, so that the transport number is improved. When "x" is equal to or less than 0.2, the chemical stability of the proton conductor is improved. From this viewpoint, this "x" more preferably satisfies $0 < x \leq 0.150$, further preferably satisfies $0 < x \leq 0.100$, even further preferably satisfies $0.003 \leq x \leq 0.050$, and particularly preferably satisfies $0.004 \leq x \leq 0.010$.

In the above formula (1), $\delta$ is an oxygen deficiency amount. The oxygen deficiency amount $\delta$ is determined according to the above "a", "x", and "y". The oxygen deficiency amount $\delta$ is, for example, in the range of equal to or greater than 0.01 and equal to or less than 0.15. The oxygen deficiency amount $\delta$ can also be determined according to the above "a", "x", and "y" and the atmosphere.

(Determination of composition ratios a, x, and y)

For determining the composition ratios a, x, and y, the content of each element contained in the metal oxide as the above-described proton conductor is used. The content of each element is quantified as follows.

10 mL of concentrated hydrochloric acid and 5 mL of concentrated nitric acid are added to 0.05 g of a powder sample of the metal oxide, and the mixed solution of concentrated hydrochloric acid and concentrated nitric acid is heated on a hot plate until a part of the powder sample is dissolved in the mixed solution.

When a part of the powder sample is dissolved, the mixed solution is once cooled to room temperature. After cooling, 1 mL of hydrogen peroxide is added to the mixed solution, and the mixed solution is heated until all of the powder sample is completely dissolved in the mixed solution.

After confirming that all of the powder sample is completely dissolved in the mixed solution, the volume of the solution is adjusted by adding ultrapure water such that the total volume is 100 mL. As a result, a reference solution for quantitative analysis is prepared. Using this reference solution, the content (mass%) of each element contained in the metal oxide is quantified. The above-described composition ratios a, x, and y are determined using a value calculated by dividing this content by the atomic weight.

In the quantitative analysis, a quantitative method suitable for the element to be analyzed is used. For example, in the case where the elements contained in the metal oxide are barium (Ba), zirconium (Zr), hafnium (Hf), and yttrium (Y), in quantitative analysis of barium (Ba), zirconium (Zr), and yttrium (Y), the above-described reference solution is diluted 50-fold to prepare a measurement solution, and ICP emission spectroscopic analysis is performed on this measurement solution. In this ICP emission spectroscopic analysis, for example, "iCAP6300" manufactured by Thermo Fisher Scientific K.K. is used.

In quantitative analysis of hafnium (Hf), the above-described reference solution is diluted 500-fold to prepare a measurement solution, and ICP mass spectrometry is performed on this measurement solution. In this ICP mass spectrometry, for example, "ICP-MS7700x" manufactured by Agilent Technologies, Inc., is used.

(X-ray absorption fine structure spectrum of metal oxide)

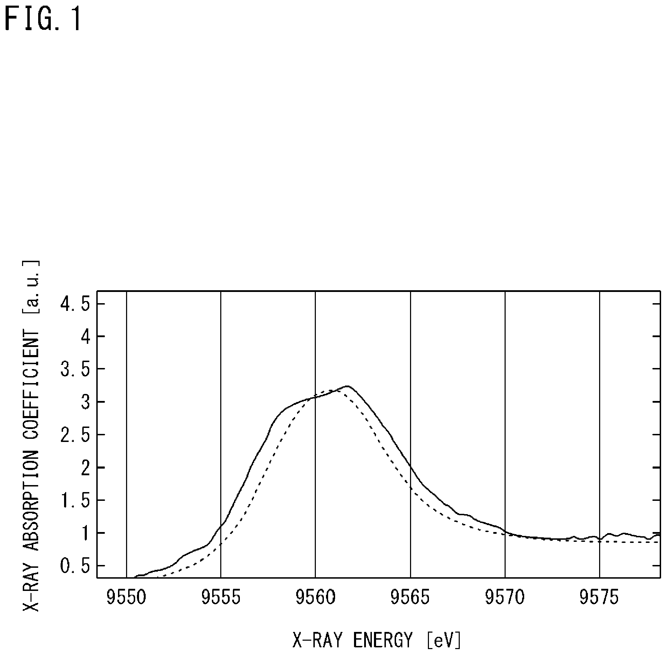

The graph of FIG. 1 shows an example of an X-ray absorption fine structure spectrum of a metal oxide contained in a proton conductor according to an embodiment of the present disclosure. The horizontal axis of the graph indicates X-ray energy (unit: eV), and the vertical axis of the graph indicates a standardized X-ray absorption coefficient (arbitrary unit: a.u.). In FIG. 1, an X-ray absorption fine structure spectrum of a later-described metal oxide having a composition of Experimental Example 6 shown in Table 1 is shown together with an X-ray absorption fine structure spectrum of hafnium oxide used as a raw material. In FIG. 1, the X-ray absorption fine structure spectrum of the metal oxide is represented by a solid line, and the X-ray absorption fine structure spectrum of hafnium oxide is represented by a dotted line.

Examples of a facility for measuring the X-ray absorption fine structure spectra shown in FIG. 1 include BL16B2 of the large synchrotron radiation facility SPring-8, BL16 of the Kyushu Synchrotron Light Research Center SAGA-LS, and BL5S1 of the Aichi Synchrotron Radiation Center Aichi SR, and the facility may be any beamline of a synchrotron radiation facility capable of similarly measuring an X-ray absorption fine structure spectrum. The measurement temperature is room temperature. As for the measurement conditions, for example, the transmission method or the fluorescence yield method can be selected from among the methods described in Chapter 4 of the book "XAFS No Kiso To Ouyo (Basics and Applications of XAFS)" edited by the Japanese XAFS Society, and can be applied to the measurement. It should be noted that, in the case of the fluorescence yield method, hafnium (Hf) L$\alpha$ rays are used. For analysis of the obtained spectrum, dedicated software as illustrated in Chapter 3 of the same book can be used. For example, the obtained spectrum is analyzed by the commercially available software REX2000 (manufactured by Rigaku Corporation) or the software Athena (Demeter package) which is open to the public free of charge.

As shown in FIG. 1, it is confirmed that both the metal oxide of Experimental Example 6 and hafnium oxide have absorption peaks in the X-ray energy range from 9550 eV to 9570 eV. These absorption peaks are absorption peaks based on the L3 absorption edge of hafnium (Hf).

As is clear from FIG. 1, in the X-ray absorption fine structure spectrum of hafnium oxide, the absorption peak at the L3 absorption edge of hafnium (Hf) is composed of a single peak having a maximum near 9560 eV. On the other hand, in the X-ray absorption fine structure spectrum of the metal oxide of Experimental Example 6, the absorption peak at the L3 absorption edge of hafnium (Hf) includes at least two peaks. Specifically, this absorption peak includes at least a first peak having an absorption maximum on the X-ray energy side lower than 9560 eV and a second peak having an absorption maximum on the X-ray energy side higher than 9560 eV.

That is, if, in an X-ray absorption fine structure spectrum, the absorption peak at the L3 absorption edge of hafnium (Hf) includes at least two peaks, this X-ray absorption fine structure spectrum is considered to indicate a state where hafnium (Hf) is introduced into a metal oxide as an element forming the crystal of the metal oxide, instead of detecting hafnium (Hf) as a reaction residue or as a result of mixing of raw materials. Since hafnium (Hf) is introduced as an element forming the crystal of the metal oxide, it is inferred that Hole conduction is inhibited and an effect of improving the transport number is achieved in this metal oxide.

From this viewpoint, preferably, the X-ray absorption fine structure spectrum of the metal oxide contained in the proton conductor has an absorption peak in the X-ray energy range from 9550 eV to 9570 eV, and this absorption peak includes at least two peaks. Specifically, more preferably, the X-ray absorption fine structure spectrum of the metal oxide has an absorption peak in the X-ray energy range from 9550 eV to 9570 eV, and this absorption peak includes at least a first peak having an absorption maximum on the X-ray energy side lower than 9560 eV and a second peak having an absorption maximum on the X-ray energy side higher than 9560 eV.

As described above, in the proton conductor, since hafnium (Hf) inhibits Hole conduction, the transport number is improved. Since the amount of Hf introduced is very small, the influence of Hf introduction on the crystal structure is suppressed. In the proton conductor, a decrease in conductivity is suppressed. In the proton conductor, an improvement in transport number is achieved while suppressing a decrease in conductivity.

[Fuel cell]

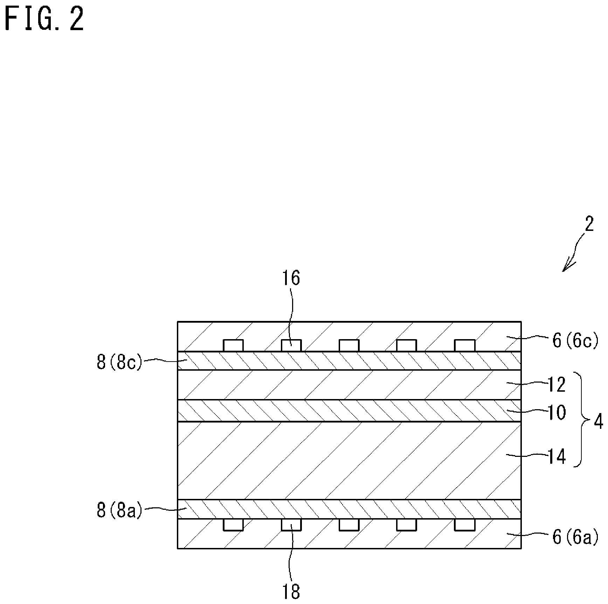

FIG. 2 is a schematic cross-sectional view illustrating the configuration of a fuel cell 2 (solid oxide fuel cell) according to an embodiment of the present disclosure. The operating temperature of the fuel cell 2 is lower than 700°C, and preferably in the midtemperature range of about 400°C to 600°C. The fuel cell 2 includes a cell structure 4, separators 6, and current collectors 8.

(Cell Structure 4)

The cell structure 4 includes an electrolyte layer 10. The electrolyte layer 10 contains the above-described proton conductor. In the fuel cell 2, the electrolyte layer 10 can contain components other than the above-described proton conductor (hereinafter, other components). However, from the viewpoint of ensuring high resistance to water and carbon dioxide and proton conductivity, the content of other components is preferably low. The electrolyte layer 10 is preferably composed of 90 vol% or more of the above-described proton conductor. More preferably, the electrolyte layer 10 does not contain other components and is composed of the above-described proton conductor.

The thickness of the electrolyte layer 10 is not particularly limited, and from the viewpoint of reducing the resistance of the electrolyte layer 10, the thickness is, for example, 1 $\mu$m to 50 $\mu$m, and preferably 3 $\mu$m to 20 $\mu$m.

The electrolyte layer 10 can be formed by baking a coating film of an electrolyte paste containing the proton conductor, a binder, and a dispersion medium (water or an organic solvent). The coating film can be formed, for example, by applying the electrolyte paste to a cathode 12 or anode 14 described later.

Prior to baking, a de-binder treatment for removing the binder by heating may be performed. As the baking, provisional baking performed at a relatively low temperature and main baking performed at a temperature higher than that of the provisional baking may be combined.

As the main baking, for example, first main baking performed at a temperature higher than that of the provisional baking and second main baking performed at a temperature higher than that of the first main baking may be combined.

When forming the electrolyte layer 10 by baking using an electrolyte paste in which the raw material of the proton conductor is used instead of the proton conductor, this raw material may be converted into the proton conductor.

The binder is a known material that can be used for the electrolyte layer 10, and examples of the binder include: polymer binders such as cellulose derivatives including ethyl cellulose (cellulose ether, etc.), vinyl acetate-based resins (including saponified products of vinyl acetate-based resins such as polyvinyl alcohol), and acrylic resin; and waxes such as paraffin wax. The amount of the binder is set, for example, in the range of 3 parts by mass to 100 parts by mass per 100 parts by mass of the proton conductor.

The temperature of the provisional baking is, for example, equal to or higher than 800°C and lower than 1200°C. The temperature of the main baking is, for example, 1200°C to 1800°C. In the case where the main baking is performed at different temperatures in multiple stages such as the first main baking and the second main baking, these temperatures may be selected from among the above-described main baking temperatures. Each of the provisional baking and the main baking may be carried out in an air atmosphere, or may be carried out in an oxygen gas atmosphere containing more oxygen than in the atmosphere.

The temperature of the de-binder treatment can be determined according to the type of the binder. In the case of performing the provisional baking, the temperature of the de-binder treatment may be lower than the temperature of the provisional baking. The temperature of the de-binder treatment may be, for example, equal to or higher than 400°C and lower than 800°C. The de-binder treatment may be carried out in an air atmosphere.

The cell structure 4 includes the cathode 12 and the anode 14. In the cell structure 4, the electrolyte layer 10 is located between the cathode 12 and the anode 14. As shown in FIG. 2, the cathode 12 is laminated on a surface on one side of the electrolyte layer 10 formed in a layered state, and the anode 14 is laminated on a surface on the other side of the electrolyte layer 10.

Although not shown, the cathode 12 has a porous structure. The material of the cathode 12 is not particularly limited, and a known material that can be used as the material of the cathode 12 in the fuel cell 2 is used. As the material of the cathode 12, a compound containing lanthanum and having a perovskite structure is preferable.

The cathode 12 is obtained, for example, by sintering a mixture of a catalyst such as platinum (Pt) and the above-described material of the cathode 12. The thickness of the cathode 12 is set as appropriate in the range of 5 $\mu$m to 2 mm, for example.

Although not shown, the anode 14 has a porous structure. The material of the anode 14 is not particularly limited, and a known material that can be used as the material of the anode 14 in the fuel cell 2 is used. Examples of the material of the anode 14 include a composite oxide of nickel oxide and a proton conductor such as yttrium oxide, BCY, BZY, and the metal oxide represented by the above formula (1).

The anode 14 is obtained, for example, by sintering a mixture of nickel oxide powder and proton conductor powder. The thickness of the anode 14 is set as appropriate in the range of 10 $\mu$m to 2 mm, for example.

(Separators 6)

The fuel cell 2 includes a pair of separators 6. One separator 6c is provided on the cathode side of the cell structure 4, and another separator 6a is provided on the anode side of the cell structure 4. As shown in FIG. 2, the cell structure 4 is interposed between the separator 6c on the cathode side and the separator 6a on the anode side.

The separator 6c on the cathode side is provided with oxidant passages 16 for supplying an oxidant to the cathode 12 of the cell structure 4. The oxidant passages 16 are provided so as to face the cathode 12. Although not shown, the oxidant passages 16 each have an oxidant inlet into which the oxidant flows, and an oxidant outlet from which water generated due to reaction, unused oxidant, etc., are discharged. Examples of the oxidant include gas containing oxygen.

The separator 6a on the anode side is provided with fuel passages 18 for supplying fuel to the anode 14 of the cell structure 4. The fuel passages 18 are provided so as to face the anode 14. Although not shown, the fuel passages 18 each have a fuel gas inlet into which the fuel gas flows, and a fuel gas outlet from which unused fuel, $H_2O$, $N_2$, and $CO_2$ generated due to reaction, etc., are discharged. Examples of the fuel gas include gas containing a gas such as hydrogen, methane, ammonia, and carbon monoxide.

In the fuel cell 2, in the cathode 12 into which the oxidant flows through the oxidant passages 16, a reaction between protons conducted through the electrolyte layer 10 and oxide ions (oxygen reduction reaction) occurs. In the anode 14 to which the fuel is supplied through the fuel passages 18, a reaction of oxidizing the fuel and releasing protons and electrons (fuel oxidation reaction) occurs.

Examples of the material of the separators 6 include heat-resistant alloys such as stainless steel, nickel-based alloys, and chromium-based alloys from the viewpoint of proton conductivity and heat resistance. Among them, stainless steel is preferable since it is inexpensive. In the fuel cell 2 (protonic ceramic fuel cell (PCFC)), since the operating temperature is about 400°C to 600°C as described above, stainless steel can be used as the material of the separators 6.

(Current collectors 8)

The fuel cell 2 can include a pair of current collectors 8. As shown in FIG. 2, one current collector 8c is disposed between the cathode 12 and the separator 6c on the cathode side. Another current collector 8a is disposed between the anode 14 and the separator 6a on the anode side. The current collector 8c on the cathode side performs a function of supplying the oxidant gas introduced from the oxidant passages 16, to the cathode 12 while diffusing the oxidant gas, in addition to a current collecting function. The current collector 8a on the anode side performs a function of supplying the fuel gas introduced from the fuel passages 18, to the anode 14 while diffusing the fuel gas, in addition to a current collecting function.

Examples of the structure used as each current collector 8 include metal porous bodies, metal meshes, punching metals, and expanded metals containing silver, a silver alloy, nickel, a nickel alloy, or the like. Among them, metal porous bodies are preferable in terms of lightness and breathability. In particular, a metal porous body having a three-dimensional network structure is preferable. The three-dimensional network structure refers to a structure in which bar-shaped or fibrous metals that form the metal porous body are three-dimensionally connected to each other to form a network. Examples of the three-dimensional network structure include a sponge-like structure and a nonwoven fabric-like structure.

A metal porous body can be formed, for example, by coating a porous body that has continuous voids and that is formed of a resin, with a metal as described above. When the internal resin is removed after the metal-coating treatment, a cavity is formed within the skeleton of the metal porous body, so that the metal porous body becomes hollow. An example of a commercially available metal porous body having such a structure is "Celmet" made of nickel and manufactured by Sumitomo Electric Industries, Ltd.

The fuel cell 2 shown in FIG. 2 includes one cell structure 4. The fuel cell 2 may be configured to include a plurality of cell structures 4. In this case, for example, the cathodeside separator 6c, the cell structure 4, and the anode-side separator 6a are laminated as one unit. In this lamination, one cell structure 4 and another cell structure 4 are, for example, connected in series by a separator provided with gas passages (oxidant passages 16 and fuel passages 18) on both surfaces thereof.

In the fuel cell 2 described above, in the cell structure 4, the electrolyte layer 10 located between the cathode 12 and the anode 14 contains a proton conductor, and the proton conductor is according to claim 1.

In the fuel cell 2, in the proton conductor, an improvement in transport number is achieved while suppressing a decrease in conductivity, and thus an improvement in electromotive force can be achieved.

[Water electrolysis device]

Although not shown, a water electrolysis device according to an embodiment of the present disclosure includes a cell structure, similar to the above-described fuel cell 2. The water electrolysis device has the same configuration as a conventional water electrolysis device, which applies a voltage to water to electrolyze the water into hydrogen and oxygen, except for the cell structure.

(Cell structure)

In the water electrolysis device, similar to the cell structure 4 of the above-described fuel cell 2, the cell structure includes a cathode, an anode, and an electrolyte layer located between the cathode and the anode. In this cell structure, the electrolyte layer has the same configuration as the electrolyte layer 10 provided in the cell structure 4 of the above-described fuel cell 2.

Although not shown, the cathode has a porous structure. The material of the cathode is not particularly limited, and a known material that can be used as the material of the cathode in the water electrolysis device is used. An example of the material of the cathode is a complex of nickel (Ni) and yttrium-stabilized zirconia.

The cathode is obtained, for example, by sintering the material of the cathode. The thickness of the cathode is set as appropriate in the range of 5 $\mu$m to 2 mm, for example.

Although not shown, the anode has a porous structure. The material of the anode is not particularly limited, and a known material that can be used as the material of the anode in the water electrolysis device is used. Examples of the material of the anode include conductive oxides that are stable in an oxidizing atmosphere, such as strontium-added lanthanum manganese oxide.

The anode is obtained, for example, by sintering the material of the anode. The thickness of the anode is set as appropriate in the range of 10 $\mu$m to 2 mm, for example.

In the water electrolysis device, a reaction in which hydrogen is generated from protons conducted through the electrolyte layer occurs in the cathode. A reaction in which water is decomposed to generate oxygen and protons occurs in the anode.

In the water electrolysis device described above, in the cell structure, the electrolyte layer located between the cathode and the anode contains a proton conductor, and the proton conductor is according to claim 1.

In the water electrolysis device, in the proton conductor, an improvement in transport number is achieved while suppressing a decrease in conductivity, and thus an improvement in current efficiency during steam electrolysis can be achieved.

EXAMPLES

Hereinafter, the present disclosure will be described in more detail by way of Examples, etc. The present disclosure is not limited to the Examples.

[Experimental Examples 1 to 9]

Powders of barium carbonate, zirconium oxide, hafnium oxide, and yttrium oxide were weighed and mixed by ball milling for 20 hours or more. The mixture was uniaxially molded, and then the molded product was baked at 1600°C for 10 hours, thereby synthesizing a proton conductor.

Ball milling was performed on the molded product of the proton conductor for 20 hours or more to obtain synthetic powder of the proton conductor. The synthetic powder was uniaxially molded, provisionally baked at 1000°C for 10 hours, and then sintered at 1600°C for 10 hours. As a result, electrolyte pellets were obtained.

Electrolyte pellets of Experimental Examples 1 to 9 were prepared by adjusting the blending amounts of barium carbonate, zirconium oxide, hafnium oxide, and yttrium oxide.

The composition ratios a, x, and y in the electrolyte pellets of Experimental Examples 1 to 9 were determined on the basis of the contents of barium (Ba), zirconium (Zr), hafnium (Hf), and yttrium (Y) quantified according to the above-described quantitative method. The results are shown in Table 1 below. In quantitative analysis of barium (Ba), zirconium (Zr), and yttrium (Y), "iCAP6300" manufactured by Thermo Fisher Scientific K.K. was used. The measurement wavelength of barium was 233.5 nm, the measurement wavelength of zirconium was 327.3 nm, and the measurement wavelength of yttrium was 324.2 nm. In quantitative analysis of hafnium (Hf), "ICP-MS7700x" manufactured by Agilent Technologies, Inc., was used. The m/z number of hafnium was 178.

[Conductivity]

Electrodes were produced by sputtering platinum (Pt) on both sides of the electrolyte pellets. The electrodes were heated in hydrogen to adjust the temperature of the electrodes to 600°C. The resistance value of the electrodes was measured by an AC impedance method to obtain a conductivity [mS/cm]. The resistance value was measured at the time when the temperature of the pellets reached 600°C and at the time when 300 hours elapsed after the temperature of the pellets reached 600°C. The conductivity calculated by the resistance value at the time when 600°C was reached is shown as an initial conductivity, and the conductivity calculated by the resistance value at the time when 300 hours elapsed after 600°C was reached is shown as a conductivity after retention, in Table 1 below. It is more preferable if the values are higher and the difference between the initial conductivity and the conductivity after retention is smaller.

[Transport number]

The conductivities in hydrogen and oxygen atmospheres were measured according to the report by Han et al., Journal of Materials Chemistry A, 6, (2018), 18571-18582. A transport number $t_{ion}$ of the electrolyte pellets at 600°C in the oxygen atmosphere was obtained according to the following formulae (2) and (3) with the conductivity in the hydrogen atmosphere as $\sigma_h$, the conductivity in the oxygen atmosphere as $\sigma_{total}$, and the oxygen partial pressure at that time as $Po_2$. The results are shown in table 1 below. As the value becomes higher, the transport number becomes larger, which is preferable.

[Math. 1]

$$\sigma_{total} = \sigma_{ion} + \sigma_h \left(p_{o_2}\right)^{\frac{1}{4}} \qquad (2)$$

[Math. 2]

$$t_{ion} = \frac{\sigma_{ion}}{\sigma_{ion} + \sigma_h \left(p_{o_2}\right)^{\frac{1}{4}}} \qquad (3)$$

[Table 1]

| Sample | Element A | Composition ratio a | Element B | Composition ratio 1_x_y | Element B' | Composition ratio x | Element M | Composition ratio y | x/1-y | Initial conductivity [μS/cm] | Conductivity after retention [μS/cm] | Transport number |
|---|---|---|---|---|---|---|---|---|---|---|---|---|
| Experimental Example 1 | Ba | 0.992 | Zr | 0.798 | Hf | 0.005 | Y | 0.197 | 0.006 | 12 | 11 | 0.85 |
| Experimental Example 2 | Ba | 0.999 | Zr | 0.799 | Hf | 0.004 | Y | 0.197 | 0.005 | 12 | 11 | 0.84 |
| Experimental Example 3 | Ba | 0.982 | Zr | 0.801 | Hf | 0.004 | Y | 0.195 | 0.005 | 11 | 11 | 0.81 |
| Experimental Example 4 | Ba | 0.988 | Zr | 0.799 | Hf | 0.005 | Y | 0.196 | 0.006 | 11 | 11 | 0.82 |
| Experimental Example 5 | Ba | 0.988 | Zr | 0.800 | Hf | 0.005 | Y | 0.195 | 0.006 | 11 | 11 | 0.82 |
| Experimental Example 6 | Ba | 1.000 | Zr | 0.790 | Hf | 0.010 | Y | 0.200 | 0.013 | 12 | 11 | 0.87 |
| Experimental Example 7 | Ba | 1.000 | Zr | 0.800 | Hf | 0.000 | Y | 0.200 | 0.000 | 13 | 11 | 0.78 |
| Experimental Example 8 | Ba | 1.000 | Zr | 0.000 | Hf | 0.800 | Y | 0.200 | 1.000 | 11 | 10 | 0.75 |
| Experimental Example 9 | Ba | 0.800 | Zr | 0.540 | Hf | 0.010 | Y | 0.450 | 0.018 | 13 | 3 | 0.65 |

As shown in Table 1, it is confirmed that, in Experimental Examples 1 to 6 as Examples, a decrease in conductivity is suppressed and an improvement in transport number is achieved as compared to Experimental Examples 7 to 9 as Comparative Examples.

## REFERENCE SIGNS LIST

| 2 | fuel cell |
|---|-----------|
| 4 | cell structure |
| 6 | separator |
| 6c | separator on cathode side |
| 6a | separator on anode side |
| 8 | current collector |
| 8c | current collector on cathode side |
| 8a | current collector on anode side |
| 10 | electrolyte layer |
| 12 | cathode |
| 14 | anode |
| 16 | oxidant passage |
| 18 | fuel passage |

## Claims

1.  A proton conductor containing a metal oxide having a perovskite crystal structure and represented by formula (1):

$$A_aB_{1-x-y}B'_xM_yO_{3-\delta} \qquad (1),$$

wherein

an element A is barium,
an element B is zirconium,
an element B' is hafnium,
an element M is yttrium,
$\delta$ is an oxygen deficiency amount,
"a" satisfies $0.9 \leq a \leq 1.0$, and
"x" and "y" satisfy $0.1 \leq y \leq 0.2$ and $0.005 \leq x/(1-y) \leq 0.013$.

2.  A fuel cell comprising a cell structure having a cathode, an anode, and an electrolyte layer located between the cathode and the anode, wherein
    the electrolyte layer contains the proton conductor according to claim 1.

3.  A water electrolysis device comprising a cell structure having a cathode, an anode, and an electrolyte layer located between the cathode and the anode, wherein
    the electrolyte layer contains the proton conductor according to claim 1.

## Patentansprüche

1.  Protonenleiter, der ein Metalloxid enthält, das eine perowskitische Kristallstruktur aufweist und durch die Formel (1) wiedergegeben wird:

$$A_aB_{1-x-y}B'_xM_yO_{3-\delta} \qquad (1)$$

wobei:

ein Element A Barium ist,

ein Element B Zirconium ist,
ein Element B' Hafnium ist,
ein Element M Yttrium ist,
$\delta$ eine Sauerstoffdefizitgröße ist,
"a" die Bedingung $0,9 \leq a \leq 1,0$ erfüllt, und
"x" und "y" die Bedingungen $0,1 \leq y \leq 0,2$ und $0,005 \leq x/(1-y) \leq 0,013$ erfüllen.

2. Brennstoffzelle, die einen Zellenaufbau mit einer Kathode, einer Anode und einer zwischen der Kathode und der Anode angeordneten Elektrolytschicht aufweist,
wobei die Elektrolytschicht den Protonenleiter gemäß Anspruch 1 enthält.

3. Wasserelektrolysevorrichtung, die einen Zellenaufbau mit einer Kathode, einer Anode und einer zwischen der Kathode und der Anode angeordneten Elektrolytschicht aufweist,
wobei die Elektrolytschicht den Protonenleiter gemäß Anspruch 1 enthält.

**Revendications**

1. Conducteur de protons contenant un oxyde métallique ayant une structure cristalline de perovskite et représenté par la formule (1) :

$$A_aB_{1-x-y}B'_xM_yO_{3-\delta} \qquad (1),$$

dans laquelle

l'élément A est le baryum,
l'élément B est le zirconium,
l'élément B' est le hafnium,
l'élément M est l'yttrium,
$\delta$ est la quantité d'insuffisance d'oxygène,
"a" satisfait à $0,9 \leq a \leq 1,0$, et
"x" et "y" satisfont à $0,1 \leq y \leq 0,2$ et $0,005 \leq x/(1-y) \leq 0,013$.

2. Pile à combustible comprenant une structure cellulaire ayant une cathode, une anode, et une couche d'électrolyte située entre la cathode et l'anode, dans laquelle
la couche d'électrolyte contient le conducteur de protons selon la revendication 1.

3. Dispositif d'électrolyse de l'eau comprenant une structure cellulaire ayant une cathode, une anode, et une couche d'électrolyte située entre la cathode et l'anode,
dans laquelle la couche d'électrolyte contient le conducteur de protons selon la revendication 1.

FIG. 1

# FIG. 2

## REFERENCES CITED IN THE DESCRIPTION

**Patent documents cited in the description**

- US 2015099623 A1
- JP 2015058399 A
- JP 2015149243 A

**Non-patent literature cited in the description**

- **CAI WEI et al.** *CERAMICS INTERNATIONAL, NL,* 28 December 2011, vol. 38 (4), 3367-3375
- **KATO KOHEI et al.** *JOURNAL OF THE AMERICAN CERAMIC SOCIETY, US,* vol. 102 (3), 1201-1210
- **IMASHUKU S. et al.** *JOURNAL OF THE ELECTRO-CHEMICAL SOCIETY,* 10 April 2008, vol. 155 (6), B581
- **YUSUKE OKUMURA et al.** *JOURNAL OF THE ELECTROCHEMICAL SOCIETY,* 01 January 2011, vol. 58 (9
- **HAN et al.** *Journal of Materials Chemistry A,* 2018, vol. 6, 18571-18582